# FASCICULE DE BREVET EUROPEEN

(11) **EP 0 989 917 B1**
(45) Date de publication et mention de la délivrance du brevet: **16.05.2001**
(21) Numéro de dépôt: 98930822.6
(22) Date de dépôt: 11.06.1998
(51) Int. Cl.: B21D 53/88

(54) **PROCEDE POUR LA LIAISON DE DEUX PIECES TUBULAIRES L'UNE A L'AUTRE ET ENSEMBLE MECANIQUE COMPORTANT DEUX PIECES TUBULAIRES**
VERFAHREN ZUM ANEINANDER VERBINDEN ZWEI ROHRFORMIGE WERKSTÜCKEN SOWIE MECHANISCHER BAUTEIL AUS ZWEI VERBUNDENEN ROHRFORMIGEN WERKSTÜCKEN
METHOD FOR MUTUALLY CONNECTING TWO TUBULAR PARTS AND MECHANICAL ASSEMBLY COMPRISING TWO TUBULAR PARTS

(30) Priorité: 18.06.1997 FR 9707564
(43) Date de publication de la demande: 05.04.2000
(73) Titulaire: VALLOUREC COMPOSANTS AUTOMOBILES VITRY, 51300 Vitry le Francois (FR)
(72) Inventeur: VALIN, Daniel, F-51300 Saint-Amand-sur-Fion (FR); DELETOMBE, Philippe, F-51100 Chalon sur Marne (FR)
(74) Mandataire: CABINET BONNET-THIRION
(86) Numéro de dépôt international: FR9801206
(87) Numéro de publication internationale: WO9857764

(56) Documents cités:
- EP-A- 0 462 394
- DE-A- 3 335 912
- GB-A- 2 291 382
- US-A- 3 103 742

## Description

La présente invention concerne un procédé pour la liaison de deux pièces tubulaires liées l'une à l'autre, et un ensemble mécanique comportant deux pièces tubulaires liées l'une à l'autre l'une de ces pièces tubulaires, dite ici par simple commodité pièce porteuse, formant un logement à la faveur duquel l'autre pièce tubulaire, dite ici par simple commodité pièce portée, lui est convenablement assemblée, selon les préambules des revendications 1 et 3 respectivement.

Par pièces tubulaires, on entend, ici, de manière usuelle, des pièces creuses, plus ou moins allongées, qui, rectilignes ou non, ont, en section transversale, un profil fermé de forme et d'épaisseur quelconques, la pièce porteuse ayant, usuellement, de surcroît, une dimension, appelée longueur, sensiblement plus grande que toutes les autres.

En tant que partie ou sous-ensemble, de tels ensembles mécaniques ainsi formés d'une pièce porteuse et d'une pièce portée entrent par exemple dans la constitution d'organes de suspension pour véhicule automobile, en intervenant alors par exemple entre les roues d'un tel véhicule automobile et la caisse de celui-ci.

Il est nécessaire, en effet, pour des raisons évidentes, d'assurer une filtration des chocs et trépidations qui, provoqués par la route, transiteraient, sans autre, vers la caisse d'un véhicule automobile, et, pour ce faire, il est usuellement mis en oeuvre des blocs élastiques, communément appelés articulations élastiques, dont l'axe est en pratique lié à la caisse du véhicule automobile, et qui, pour leur intervention entre celle-ci et les roues, sont chacun individuellement disposés dans des douilles solidaires, par ailleurs, des fusées porteuses de ces dernières.

Une telle douille constitue, ici, à titre d'exemple, l'une des pièces, en l'espèce la pièce portée, des ensembles mécaniques concernés par la présente demande de brevet.

L'autre des pièces, en l'espèce la pièce porteuse, est alors constituée par un corps de bras tubulaire, communément appelé bras de suspension.

Le problème est d'assurer une liaison convenable entre la pièce portée et la pièce porteuse.

Or, s'agissant de bras de suspension pour véhicule automobile, la partie de la pièce porteuse dans laquelle doit être façonné le logement nécessaire à la réception de la pièce portée doit, par ailleurs, pour des raisons d'encombrement, aussi bien que pour que ses dimensions transversales soient adaptées à celles de la pièce portée, être l'objet d'un certain rétreint, suivi d'un certain aplatissement, qui, par un écrasement limité, conduit deux zones de paroi opposées de cette pièce porteuse à se rapprocher l'une de l'autre.

C'est donc dans une partie partiellement écrasée de la pièce porteuse que doit être façonné le logement appelé à recevoir la pièce portée, l'assemblage de cette pièce portée à la pièce porteuse étant ensuite assuré par exemple par soudage ou sertissage.

Cette disposition, qui donne satisfaction, présente des inconvénients.

Tout d'abord, le rétreint à assurer est par lui-même une opération coûteuse qu'il est souhaitable de pouvoir éviter.

En outre, et surtout, le façonnage du logement nécessaire à la réception de la pièce portée ne peut le plus souvent se faire que par usinage, ce qui, au détriment des coûts, exige des investissements lourds et une main d'oeuvre qualifiée.

Pour éviter ces inconvénients, on a déjà proposé, par exemple dans le document GB-A-2 291 382, un procédé pour la liaison de deux pièces tubulaires l'une à l'autre, du genre suivant lequel on écrase, localement, l'une de ces pièces tubulaires, dite ici pièce porteuse, de manière à rapprocher l'une de l'autre deux zones de paroi opposées de celle-ci, on pousse l'écrasement de la pièce porteuse jusqu'à ce que les deux zones de paroi concernées de celle-ci soient au moins localement en contact l'une avec l'autre suivant une zone d'affrontement mutuel, on façonne, par découpe, dans la partie ainsi écrasée de cette pièce porteuse, un trou, à contour fermé, formant un logement propre à recevoir l'autre pièce tubulaire, dite ici pièce portée, et on assemble cette pièce portée à la pièce porteuse à la faveur de ce logement.

L'invention concerne un procédé du genre ci-dessus dans lequel le parti est volontairement pris de procéder, localement, à un écrasement complet de la pièce porteuse, dans la partie de celle-ci dans laquelle doit être façonné un logement pour la pièce portée.

Il est ainsi avantageusement possible de réaliser ensuite par simple découpe, et, donc, de manière particulièrement aisée et économique, le logement recherché, cette découpe pouvant par exemple se faire elle aussi à la presse.

Toutefois, dans un tel procédé tel qu'appliqué dans le document déjà cité, malgré l'écrasement total dont elle est l'objet, la section transversale de la pièce porteuse présente un moment d'inertie insuffisant, et, donc, la résistance à la torsion et/ou à la flexion de cette pièce porteuse n'est pas satisfaisante.

La présente invention a d'une manière générale pour objet une disposition permettant d'éviter ces inconvénients et conduisant, en outre, à d'autres avantages.

Selon l'invention, cet objet est atteint par un procédé du genre ci-dessus est caractérisé en ce que, la pièce portée intervenant en bout de la pièce porteuse, il est fait en sorte que la zone d'affrontement mutuel des deux zones de paroi concernées de la partie écrasée de cette pièce porteuse s'étende de l'un à l'autre de deux plans, qui, parallèles l'un à l'autre, sont décalés l'un par rapport à l'autre suivant la direction d'écrasement de ces deux zones de paroi.

Autrement dit, au lieu d'être complètement aplatie, et donc de s'étendre exclusivement à plat, cette partie écrasée de la pièce porteuse s'étend au contraire préférentiellement au moins en partie en volume suivant sa direction d'écrasement, et, donc, en pratique, suivant l'axe de la pièce portée, en présentant pour ce faire l'une ou l'autre de nombreuses configurations envisageables.

Par exemple, la partie écrasée de la pièce porteuse peut avoir en section transversale une configuration en U ou en T, ou une quelconque autre configuration non plane.

L'écrasement ainsi non plan de la pièce porteuse permet avantageusement d'adapter la section de celle-ci aux dimensions de la pièce portée, en la diminuant, et, donc, d'éviter tout retreint préliminaire.

En outre, la disposition suivant l'invention permet avantageusement de réaliser, si désiré, deux pièces porteuses à la fois, au bénéfice d'une réduction des coûts pour l'ensemble.

Partant d'une même pièce tubulaire, il suffit, en effet, pour ce faire, d'intervenir de manière symétrique sur cette pièce tubulaire, et de séparer ensuite l'une de l'autre les deux pièces porteuses alors ainsi formées.

L'invention a également pour objet un ensemble mécanique selon la revendication 3. Un bras de suspension pour véhicule automobile, comportant un tel ensemble est défini dans la revendication 22.

Les objets de l'invention, leurs caractéristiques et leurs avantages ressortiront de la description qui va suivre, à titre d'exemple, en référence aux dessins schématiques annexés sur lesquels :
la figure 1 est une vue partielle en perspective d'un ensemble mécanique suivant un mode de réalisation de l'invention ;
la figure 2 en est une vue partielle en coupe longitudinale, suivant la ligne II-II de la figure 1 ;
la figure 3 en est une vue partielle en plan, suivant la flèche III de la figure 1 ;
les figures 4, 5 et 6 en sont des vues en coupe transversale, suivant, chacune respectivement, les lignes IV-IV, V-V et VI-VI de la figure 3 ;
les figures 7A, 7B, 7C, 7D sont des vues partielles en coupe longitudinale illustrant diverses phases successives du procédé suivant l'invention lorsque celui-ci est destiné à conduire à la réalisation conjointe de deux pièces porteuses pour deux ensembles mécaniques du type de celui représenté à la figure 1 ;
les figures 8A, 8B, 8C et 8D sont des vues partielles en coupe transversale correspondant chacune respectivement aux lignes VIIIA-VIIIA, VIIIB-VIIIB, VIIIC-VIIIC et VIIID-VIIID des figures 7A, 7B, 7C et 7D ;
la figure 9 est, suivant la ligne IX-IX de la figure 7C, une vue en coupe transversale du poinçon représenté en élévation sur cette figure 7C ;
la figure 10 est, suivant la flèche X de la figure 7C, une vue partielle en plan de la pièce tubulaire concernée ;
la figure 11 est, de manière semblable, mais suivant la flèche XI de la figure 7D, une vue en plan illustrant la séparation en deux pièces porteuses de cette pièce tubulaire ;
la figure 12 est, suivant la flèche XII de la figure 11, une vue de bout d'une pièce porteuse pour l'ensemble mécanique suivant l'invention ;
les figures 13, 14, 15, 16, 17, 18, 19 et 20 sont des vues de bout, qui, analogues à celle de la figure 12, se rapportent, chacune respectivement, à une variante de réalisation.

Tel qu'illustré sur ces figures, il s'agit, globalement, d'assurer la réalisation d'un ensemble mécanique 10 comportant deux pièces tubulaires 11, 12 liées l'une à l'autre, l'une de ces pièces tubulaires 11, 12, dite ici pièce porteuse, en l'espèce la pièce tubulaire 11, formant un logement 13 à la faveur duquel l'autre pièce tubulaire 11, 12, dite ici pièce portée, en l'espèce la pièce tubulaire 12, lui est assemblée.

Sur les figures, la pièce porteuse 11 n'a été que partiellement représentée.

Il s'agit, en effet, d'une pièce tubulaire relativement allongée dont la longueur, sans incidence sur l'invention, est indéterminée.

Dans les formes de réalisation représentées, la pièce portée 12 intervient en bout de la pièce porteuse 11, et il s'agit d'une simple douille de hauteur limitée.

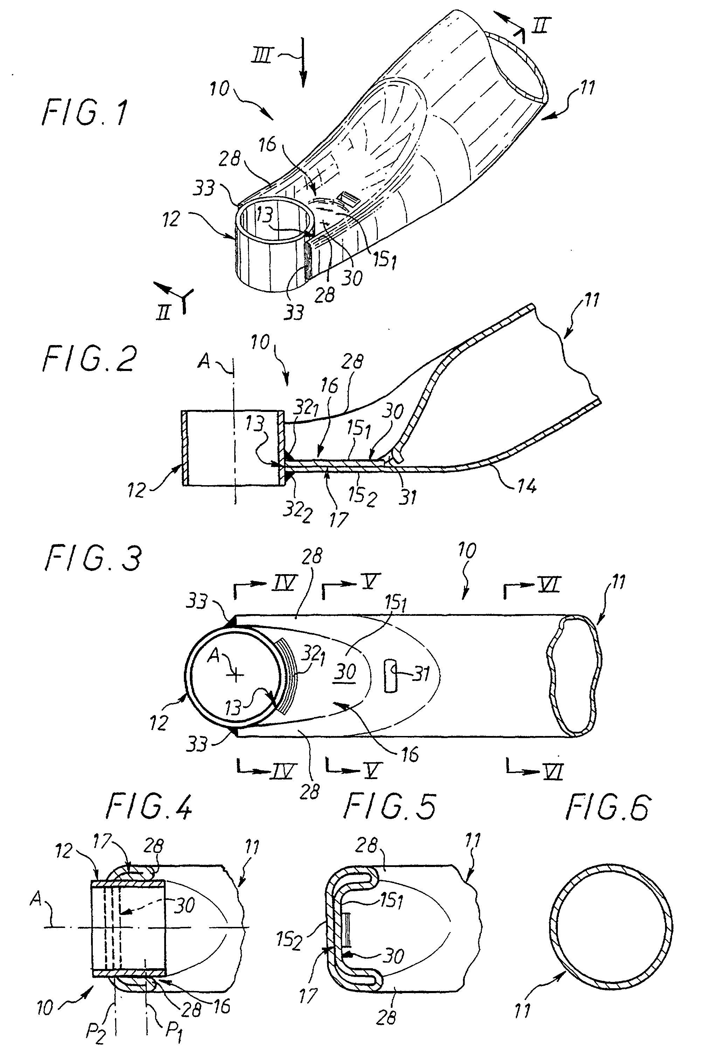

Soit A l'axe de cette pièce portée 12, tel que schématisé en traits interrompus sur les figures 2 et 4, et tel que repéré par sa trace sur la figure 3.

Dans les formes de réalisation représentées, il a été supposé, par mesure de simplicité, que, sur toute sa longueur, la pièce porteuse 11 s'étendait globalement suivant un plan passant par l'axe A de la pièce portée 12, tout en faisant, dans ce plan, à distance de la pièce portée 12, un léger coude 14.

Mais il n'en est pas nécessairement ainsi, la pièce portée 12 pouvant au contraire plus ou moins s'écarter d'un tel plan à distance de la pièce porteuse 11, ou, d'une manière plus générale, avoir une configuration quelconque.

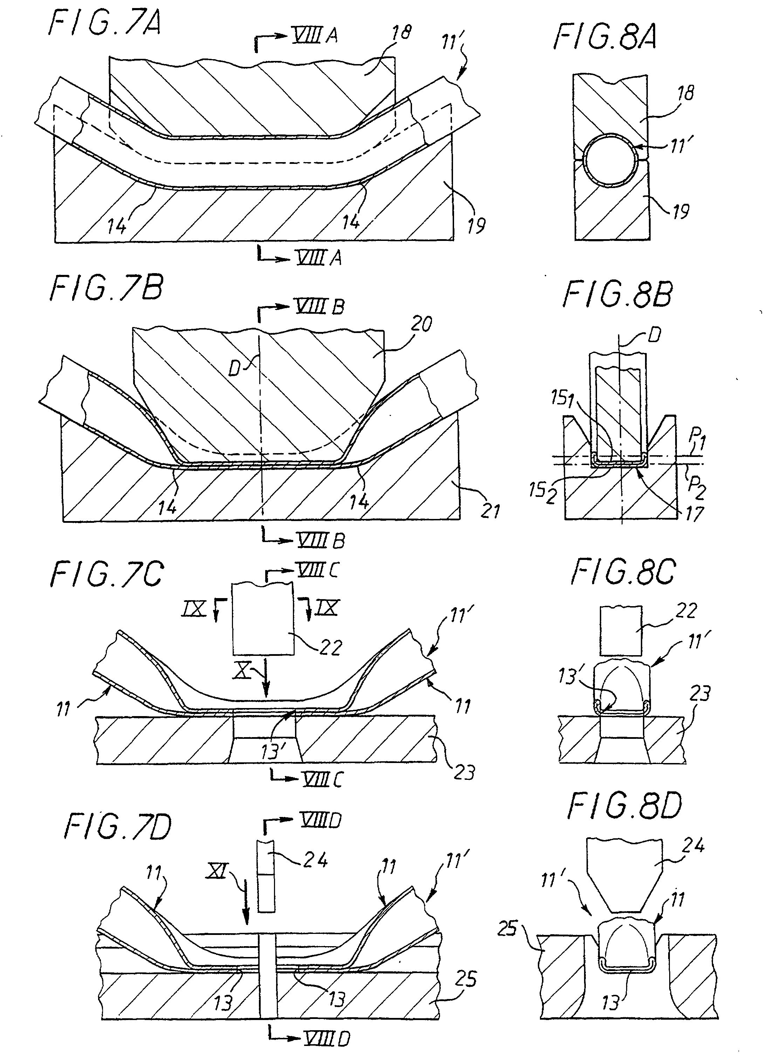

Dans les formes de réalisation représentées, enfin, il a été supposé, également par simplicité, que, en section transversale, la pièce porteuse 11 avait, dans sa partie courante, un profil circulaire, figure 6, et que, de même, la pièce portée 12 avait, en section transversale, un profil circulaire.

Mais il n'en est pas nécessairement ainsi, l'un et/ou l'autre de ces profils pouvant au contraire être quelconques.

De manière connue en soi, pour la liaison des deux pièces tubulaires 11, 12 l'une à l'autre, on écrase, localement, l'une de ces pièces tubulaires 11, 12, en l'espèce la pièce porteuse 11, de manière à rapprocher l'une de l'autre deux zones de paroi 15₁, 15₂ opposées de celle-ci, la zone de paroi 15₁ devenant par exemple sa paroi supérieure et la zone de paroi 15₂ sa paroi inférieure, on façonne, dans la partie 16 ainsi écrasée de cette pièce porteuse 11, le logement 13 propre à recevoir l'autre pièce tubulaire 11, 12, en l'espèce la pièce portée 12, et, suivant des modalités décrites plus en détail ultérieurement, on assemble cette pièce portée 12 à la pièce porteuse 11 à la faveur au moins de ce logement 13.

Préférentiellement, et cela est le cas dans les formes de réalisation représentées, le logement 13 façonné dans la pièce porteuse 11 doit être propre à recevoir la pièce portée 12 transversalement, c'est-à-dire sensiblement perpendiculairement à la direction initiale d'allongement de cette pièce porteuse 11.

Ici, on pousse l'écrasement de. la pièce porteuse 11 jusqu'à ce que les deux zones de paroi 15₁, 15₂ concernées de celle-ci soient au moins localement en contact l'une avec l'autre suivant une zone d'affrontement mutuel 17, et on façonne par découpe, par exemple par poinçonnage à la presse, dans cette zone d'affrontement mutuel 17, le logement 13 nécessaire à la réception de la pièce portée 12.

Préférentiellement, l'écrasement de la pièce porteuse 11 se fait suivant une direction d'écrasement D, figures 7B et 8B, choisie pour correspondre à l'axe A de la pièce portée 12.

Préférentiellement, également, mais non pas obligatoirement, partant d'une même pièce tubulaire 11' mère, on intervient de manière symétrique sur celle-ci de manière à y façonner en vis-à-vis deux pièces porteuses 11 identiques, et on sépare ensuite l'une de l'autre ces deux pièces porteuses 11.

Au cours d'une première opération, qui est en fait facultative, il est procédé, figures 7A et 8A, à une mise en forme de la pièce tubulaire 11' lorsque, comme représenté, les pièces porteuses 11 recherchées comportent un coude 14.

Cette première opération suppose donc un simple cambrage de la pièce tubulaire 11' en deux points opposés de celle-ci.

Il est mis en oeuvre, pour ce faire, par exemple sur une presse hydraulique, deux conformateurs 18, 19 de forme appropriée, l'un supérieur, l'autre inférieur.

Au cours d'une deuxième opération, figures 7B et 8B, il est procédé, par emboutissage, à l'écrasement de la pièce tubulaire 11' entre les deux coudes 14.

Il est mis en oeuvre, pour ce faire, par exemple sur une presse hydraulique, un poinçon d'emboutissage 20 et une matrice 21.

Au cours d'une troisième opération, figures 7C et 8C, il est procédé à la découpe, dans la pièce tubulaire 11', et, plus précisément, dans la partie écrasée 16 de celle-ci, au milieu de cette partie écrasée 16, d'un logement 13' correspondant aux deux logements 13 à former.

Il est par exemple mis en oeuvre, pour ce faire, par exemple sur une presse hydraulique, un poinçon de découpe 22 et une matrice 23.

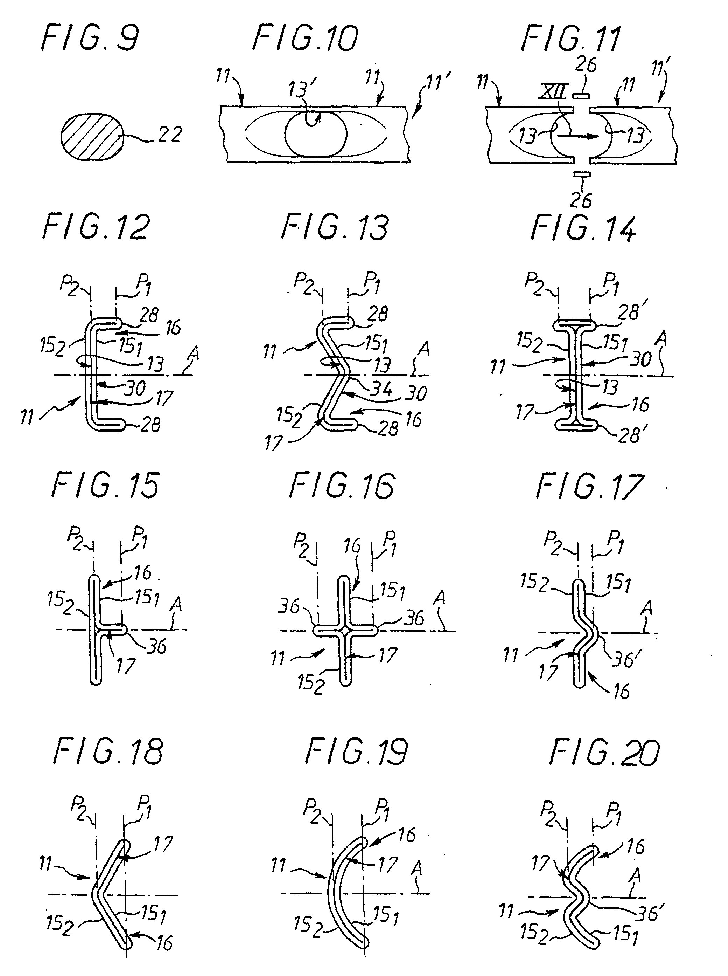

Comme il est mieux visible sur la figure 9, le poinçon de découpe 22 présente, en section transversale, un profil oblong.

Enfin, au cours d'une quatrième opération, figures 7D et 8D, il est procédé à une séparation des deux pièces porteuses 11, par partition de la pièce tubulaire 11'.

Il est mis en oeuvre, pour ce faire, par exemple sur une presse hydraulique, une lame de coupe 24 et une matrice 25.

La lame de coupe 24 intervient transversalement, au milieu du logement 13', en détachant de la pièce tubulaire il', sur deux bords opposés de ce logement 13', deux languettes 26, figure 11.

Bien entendu, toutes ces opérations peuvent être effectuées sur une même presse hydraulique, à l'aide d'outils à suivre.

Quoi qu'il en soit, il résulte de ce qui précède que le logement 13 que forme une pièce porteuse 11 pour recevoir une pièce portée 12 est découpé dans une partie écrasée 16 de cette pièce porteuse 11 dans laquelle deux zones de paroi opposées 15₁, 15₂ de celle-ci sont au moins localement en contact l'une avec l'autre suivant une zone d'affrontement mutuel 17.

Dans les formes de réalisation représentées, le logement 13 formé sur la pièce porteuse 11 s'étend en demi-cercle, suivant un diamètre qui correspond au diamètre extérieur de la pièce portée 12.

Préférentiellement, et cela est le cas dans toutes les formes de réalisation représentées, il est fait en sorte que la zone d'affrontement mutuel 17 des deux zones de paroi 15₁, 15₂ concernées de la pièce porteuse 11 s'étende de l'un à l'autre de deux plans P₁, P₂, qui, parallèles l'un à l'autre, sont décalés l'un par rapport à l'autre suivant la direction d'écrasement D de ces deux zones de paroi 15₁, 15₂, figure 8B, et, donc, suivant l'axe A de la pièce portée 12, figures 4 et 12 à 20.

Autrement dit, la zone d'affrontement mutuel 17 des deux zones de paroi 15₁, 15₂ de la partie écrasée 16 de la pièce porteuse 11 a, au moins localement, des points communs avec deux plans P₁, P₂ qui, parallèles l'un à l'autre, sont décalés l'un par rapport à l'autre.

Dans la forme de réalisation plus particulièrement représentée sur les figures 1 à 6, la partie écrasée 16 de la pièce porteuse 11 forme, latéralement, suivant la zone d'affrontement mutuel 17 de ses deux zones de paroi 15₁, 15₂ opposées, deux rebords 28, qui, disposés de part et d'autre d'une portion médiane 30, font saillie d'un même côté de cette portion médiane 30, sensiblement parallèlement l'un à l'autre, et qui, chacun respectivement, s'étendent de part et d'autre de l'axe A de la pièce portée 12.

En outre, dans cette forme de réalisation, la portion médiane 30 de la partie écrasée 16 de la pièce porteuse 11 est plane, et elle s'étend sensiblement perpendiculairement à l'axe A de la pièce portée 12.

Par ses rebords 28, la pièce porteuse 11 encadre la pièce portée 12.

Plus précisément, dans la forme de réalisation représentée, les rebords 28 de la pièce porteuse 11 s'étendent sensiblement tangentiellement par rapport à la pièce portée 12, et, à leur extrémité, ils sont solidarisés à celle-ci.

Par ailleurs, dans cette forme de réalisation, et ainsi qu'il est visible sur la figure 5, les zones de paroi 15₁, 15₂ de la pièce porteuse 11 s'écartent progressivement l'une de l'autre le long de ses rebords 28 à compter de la pièce portée 12 tout en restant au contact l'une de l'autre le long de sa portion médiane 30.

Par ailleurs, dans la forme de réalisation représentée, la zone de paroi 15₁ de la pièce porteuse 11 comporte, par crevé, en bordure de la portion médiane 30 de la partie écrasée 16 de cette pièce porteuse 11, une ouverture 31 destinée à servir d'évent lors d'un traitement au trempé de l'ensemble mécanique 10 concerné.

Enfin, dans cette forme de réalisation, l'assemblage de la pièce portée 12 à la pièce porteuse 11 se fait, à titre d'exemple, par soudage.

Par exemple, et tel que représenté, il est prévu un cordon de soudage 32₁, en arc de cercle, entre la zone de paroi 15₁ de la pièce porteuse 11 et la pièce portée 12, un autre cordon de soudage 32₂, en arc de cercle, entre la zone de paroi 15₂ de la pièce porteuse 11 et la pièce portée 12, et, en bout de chacun des rebords 28 de la pièce porteuse 11, entre un tel rebord 28 et la pièce portée 12, suivant une génératrice de cette dernière, un cordon de soudage 33.

Autrement dit, il est assuré une solidarisation de la pièce portée 12 à la pièce porteuse 11 non seulement à la faveur du logement 13 par lequel la pièce portée 12 est en prise avec la pièce porteuse 11, mais encore à la faveur des rebords 28 de cette dernière.

Il est ainsi obtenu un assemblage de la pièce porteuse 11 et de la pièce portée 12 qui, tout en étant relativement économique à réaliser, est très solide, la pièce porteuse 11 présentant une grande rigidité, à la fois en torsion, autour de sa direction d'allongement, qu'en flexion, tant dans son plan médian, c'est-à-dire dans le plan qui, passant par sa ligne médiane, est perpendiculaire à sa partie écrasée 16, schématisée par le plan P₂, que dans ce plan P₂.

Sur les figures 12 à 20, la zone d'affrontement mutuel 17, qui est perpendiculaire au plan de ces figures 12 à 20, apparaît par sa tranche, et, puisqu'elle est formée d'une ou plusieurs surfaces, elle y est représentée par de simples lignes définissant son profil.

Dans la forme de réalisation représentée sur la figure 12, qui correspond à celle représentée sur les figures 1 à 6, ce profil est, globalement, en U à fond plat (ou en C, suivant le sens d'observation pratiqué).

Il en est sensiblement de même dans la forme de réalisation de la figure 13, mais, dans cette forme de réalisation, la portion médiane 30 de la partie écrasée 16 de la pièce porteuse 11 comporte, localement, au moins une déformation 34.

Par exemple, et tel que représenté, cette déformation 34 concerne l'une et l'autre des deux zones de paroi 15₁ 15₂ de la pièce porteuse 11, et elle a la forme d'un dièdre dont la concavité est tournée du côté opposé aux rebords 28.

En pratique, l'arête du dièdre en question s'étend suivant la ligne centrale de la portion médiane 30, et, de manière symétrique, ses deux pans s'étendent en continu de cette arête à la base des rebords 28.

Suivant la forme de réalisation de la figure 14, la partie écrasée 16 de la pièce porteuse 11 forme, latéralement, suivant la zone d'affrontement mutuel 17 de ses deux zones de paroi 15₁, 15₂ opposées, deux rebords 28', qui, disposés de part et d'autre de sa portion médiane 30, font saillie des deux côtés de cette portion médiane 30, et qui, chacun respectivement, s'étendent, comme précédemment, de part et d'autre de l'axe A de la pièce portée 12.

Comme précédemment, également, la pièce porteuse 11 encadre la pièce portée 12 par ces rebords 28', et ceux-ci s'étendent sensiblement tangentiellement par rapport à la pièce portée 12, en étant solidarisés à celle-ci à leur extrémité.

Dans la forme de réalisation représentée sur la figure 14, le profil de la zone d'affrontement mutuel 17 des deux zones de paroi 15₁, 15₂ opposées de la pièce porteuse 11 est globalement en H (ou en I, suivant le sens d'observation pratiqué).

Dans les formes de réalisation représentées sur les figures 15 à 17, la partie écrasée 16 de la pièce porteuse 11 forme, axialement, c'est-à-dire dans sa zone centrale, suivant la zone d'affrontement mutuel 17 de ses deux zones de paroi 15₁, 15₂ opposées, au moins une nervure 36, 36', tout en s'étendant par ailleurs de manière sensiblement plane, perpendiculairement à l'axe A de la pièce portée 12.

Par exemple, figure 15, une seule nervure 36 est prévue, et celle-ci est formée par une déformation locale d'une des zones de paroi 15₁, 15₂ de la pièce porteuse 11, en l'espèce la zone de paroi 15₁ supérieure de celle-ci.

En variante, figure 16, il y a, dos à dos, deux nervures 36, à raison d'une par zone de paroi 15₁, 15₂ de la pièce porteuse 11.

Dans la forme de réalisation de la figure 17, la nervure 36', qui est unique, est formée par une déformation conjointe de l'une et de l'autre des zones de paroi 15₁, 15₂ de la pièce porteuse 11, et elle a la forme d'un dièdre, en n'affectant cependant que la zone centrale de la pièce porteuse 11.

La ou les nervures 36, 36' s'étendent sensiblement radialement par rapport à la pièce portée 12, et, à leur extrémité, elles sont aboutées, et solidarisées, à cette pièce portée 12, suivant des dispositions de même type que celles précédemment mentionnées.

Dans les formes de réalisation représentées sur les figures 18 à 20, la partie écrasée 16 de la pièce porteuse 11 est, suivant la zone d'affrontement mutuel 17 de ses deux zones de paroi 15₁, 15₂ opposées, globalement pliée ou cintrée, suivant la forme générale d'une gouttière allongée sensiblement perpendiculairement à l'axe A de la pièce portée 12, et avec une concavité qui, par exemple, et tel que représenté, est tournée du côté de sa zone de paroi 15₁ supérieure.

Par exemple, figure 18, cette partie écrasée 16 est globalement pliée en dièdre.

En variante, figures 19 et 20, elle est globalement cintrée en arc de cercle.

En outre, dans la forme de réalisation représentée sur la figure 20, cette partie écrasée 16 de la pièce porteuse 11 forme, dans sa zone centrale, au moins une nervure 36', qui, par exemple, et tel que représenté, a, comme précédemment, la forme d'un dièdre dont la concavité est tournée du côté de sa zone de paroi 15₂ inférieure.

Ainsi qu'on le notera, la zone d'affrontement mutuel 17 des deux zones de paroi 15₁, 15₂ opposées de la pièce porteuse 11 a, dans tous les cas, une configuration autre que plane, et, comme précédemment, la solidarisation de la pièce portée 12 à la pièce porteuse 11 se fait non seulement à la faveur du logement 13 que comporte la pièce porteuse 11, mais également à la faveur des rebords 28, 28' ou nervures 36, 36' de celle-ci.

Dans les formes de réalisation représentées, l'ensemble mécanique 10 suivant l'invention forme, en tout ou partie, à titre d'exemple, un bras de suspension pour véhicule automobile.

Autrement dit, la présente invention s'étend à tout bras de suspension pour véhicule automobile comportant un tel ensemble mécanique 10.

Mais, bien entendu, la présente invention ne se limite pas au mode de mise en oeuvre et/ou aux formes de réalisation représentés, en englobant, au contraire, toute variante d'exécution, sans sortir du cadre de l'invention telle que revendiquée.

En outre, la découpe à effectuer sur la pièce porteuse pour le façonnage du logement recherché ne se fait pas nécessairement par poinçonnage, et, a fortiori, par poinçonnage à la presse.

Elle peut au contraire se faire à l'aide d'autres moyens de découpe, et, par exemple, au laser.

Enfin, le domaine d'application de l'invention ne se limite pas à celui des seuls bras de suspension pour véhicules automobiles, mais s'étend d'une manière plus générale à tous les ensembles mécaniques comportant deux pièces tubulaires liées l'une à l'autre.

## Revendications

1. Procédé pour la liaison de deux pièces tubulaires (11, 12) l'une à l'autre, du genre suivant lequel on écrase, localement, l'une de ces pièces tubulaires, dite ici pièce porteuse (11), de manière à rapprocher l'une de l'autre deux zones de paroi opposées (15₁, 15₂) de celle-ci, on pousse l'écrasement de la pièce porteuse (11) jusqu'à ce que les deux zones de paroi (15₁, 15₂) concernées de celle-ci soient au moins localement en contact l'une avec l'autre suivant une zone d'affrontement mutuel (17), on façonne, par découpe, dans la partie ainsi écrasée de cette pièce porteuse (11), un logement (13) propre à recevoir l'autre pièce tubulaire, dite ici pièce portée (12), et on assemble cette pièce portée (12) à la pièce porteuse (11) à la faveur de ce logement (13), caractérisé en ce que, la pièce portée (12) intervenant en bout de la pièce porteuse (11), on fait en sorte que la zone d'affrontement mutuel (17) des deux zones de paroi (15₁, 15₂) concernées de la pièce porteuse (11) s'étende de l'un à l'autre de deux plans (P₁, P₂), qui, parallèles l'un à l'autre, sont décalés l'un par rapport à l'autre suivant la direction d'écrasement (D) de ces deux zones de paroi (15₁, 15₂).

2. Procédé suivant la revendication 1, caractérisé en ce que, partant d'une même pièce tubulaire (11'), on intervient de manière symétrique sur celle-ci de manière à y façonner en vis-à-vis deux pièces porteuses (11) identiques, et on sépare ensuite l'une de l'autre ces deux pièces porteuses (11).

3. Ensemble mécanique comportant deux pièces tubulaires (11, 12) liées l'une à l'autre, l'une de ces pièces tubulaires (11, 12), dite pièce porteuse (11), formant un logement (13) à la faveur duquel l'autre pièce tubulaire (11, 12), dite pièce portée (12), lui est assemblée, caractérisé en ce que, en application d'un procédé conforme à l'une quelconque des revendications 1 et 2, le logement (13) que forme la pièce porteuse (11) est découpé dans une partie écrasée (16) de cette pièce porteuse (11) dans laquelle deux zones de paroi (15₁, 15₂) opposées de celle-ci sont au moins localement en contact l'une avec l'autre suivant une zone d'affrontement mutuel (17) qui s'étend de l'un à l'autre de deux plans (P₁, P₂) qui, parallèles l'un à l'autre, sont décalés l'un par rapport à l'autre suivant l'axe (A) de la pièce portée (12), la pièce portée (12) intervenant en bout de la pièce porteuse (11).

4. Ensemble mécanique suivant la revendication 3, caractérisé en ce que, suivant la zone d'affrontement mutuel (17) de ses deux zones de paroi (15₁, 15₂) opposées, la partie écrasée (16) de la pièce porteuse (11) forme, latéralement, deux rebords (28), qui, disposés de part et d'autre d'une portion médiane (30), font saillie d'un même côté de cette portion médiane (30), sensiblement parallèlement l'un à l'autre, et qui, chacun respectivement, s'étendent de part et d'autre de l'axe (A) de la pièce portée (12).

5. Ensemble mécanique suivant la revendication 4, caractérisé en ce que la portion médiane (30) de la partie écrasée (16) de la pièce porteuse (11) est plane, et elle s'étend sensiblement transversalement par rapport à l'axe (A) de la pièce portée (12).

6. Ensemble mécanique suivant la revendication 5, caractérisé en ce que la portion médiane (30) s'étend sensiblement perpendiculairement à l'axe (A) de la pièce portée (12).

7. Ensemble mécanique suivant la revendication 4, caractérisé en ce que la portion médiane (30) de la partie écrasée (16) de la pièce porteuse (11) comporte, localement, au moins une déformation (34).

8. Ensemble mécanique suivant la revendication 7, caractérisé en ce que la déformation (34) de la portion médiane (30) de la partie écrasée (16) de la pièce porteuse (11) a la forme d'un dièdre.

9. Ensemble mécanique suivant la revendication 3, caractérisé en ce que, suivant la zone d'affrontement mutuel (17) de ses deux zones de paroi (15₁, 15₂) opposées, la partie écrasée (16) de la pièce porteuse (11) forme, latéralement, deux rebords (28'), qui, disposés de part et d'autre d'une portion médiane (30), font saillie des deux côtés de cette portion médiane (30), et qui, chacun respectivement, s'étendent de part et d'autre de l'axe (A) de la pièce portée (12).

10. Ensemble mécanique suivant l'une quelconque des revendications 4 à 9, caractérisé en ce que, par ses rebords (28, 28'), la pièce porteuse (11) encadre la pièce portée (12).

11. Ensemble mécanique suivant la revendication 10, caractérisé en ce que les rebords (28, 28') de la pièce porteuse (11) s'étendent sensiblement tangentiellement par rapport à la pièce portée (12).

12. Ensemble mécanique suivant la revendication 3, caractérisé en ce que la partie écrasée (16) de la pièce porteuse (11) forme, dans sa zone centrale, suivant la zone d'affrontement mutuel (17) de ses deux zones de paroi (15₁, 15₂) opposées, au moins une nervure (36, 36').

13. Ensemble mécanique suivant la revendication 12, caractérisé en ce que la nervure (36) est formée par une déformation locale d'une des zones de paroi (15₁, 15₂) de la pièce porteuse (11).

14. Ensemble mécanique suivant la revendication 13, caractérisé en ce qu'il y a dos à dos deux nervures (36), à raison d'une par zone de paroi (15₁, 15₂) de la pièce porteuse (11).

15. Ensemble mécanique suivant la revendication 12, caractérisé en ce que la nervure (36') est formée par une déformation conjointe de l'une et de l'autre des zones de paroi (15₁, 15₂) de la pièce porteuse (11).

16. Ensemble mécanique suivant la revendication 3, caractérisé en ce que, suivant la zone d'affrontement mutuel (17) de ses deux zones de paroi (15₁, 15₂) opposées, la partie écrasée (16) de la pièce porteuse (11) est globalement pliée ou cintrée, suivant la forme générale d'une gouttière allongée sensiblement perpendiculairement à l'axe (A) de la pièce portée (12).

17. Ensemble mécanique suivant la revendication 16, caractérisé en ce que la partie écrasée (16) de la pièce porteuse (11) est globalement pliée en dièdre.

18. Ensemble mécanique suivant la revendication 16, caractérisé en ce que la partie écrasée (16) de la pièce porteuse (11) est globalement cintrée en arc de cercle.

19. Ensemble mécanique suivant l'une quelconque des revendications 16 à 18, caractérisé en ce que la partie écrasée (16) de la pièce porteuse (11) forme, dans sa zone centrale, au moins une nervure (36').

20. Ensemble mécanique suivant l'une quelconque des revendications 3 à 19, caractérisé en ce que la pièce portée (12) est une. douille de hauteur limitée.

21. Ensemble mécanique suivant l'une quelconque des revendications 6 à 20, caractérisé en ce que le logement (13) formé sur la pièce porteuse (11) s'étend en demi-cercle suivant un diamètre qui correspond au diamètre extérieur de la pièce portée (12).

22. Bras de suspension, pour véhicule automobile, caractérisé en ce qu'il comporte un ensemble mécanique (10) suivant l'une quelconque des revendications 3 à 21.

## Patentansprüche

1. Verfahren, um zwei rohrförmige Teile (11, 12) auf eine Weise miteinander zu verbinden, bei der eines dieser rohrförmigen Teile, hier tragendes Teil (11) genannt, stellenweise so zusammengedrückt wird, daß zwei einander gegenüberliegende Wandzonen (15₁, 15₂) dieses Teils einander angenähert werden, wobei das tragende Teil (11) so weit zusammengedrückt wird, daß die beiden betroffenen Wandzonen (15₁, 15₂) dieses Teils zumindest lokal in einer Zone gegenseitigen Aneinanderstoßens (17) miteinander in Kontakt stehen, bei der durch Ausschneiden aus dem so zusammengedrückten Bereich dieses tragenden Teils (11) ein Sitz (13) geformt wird, der das andere rohrförmige Teil, hier getragenes Teil (12) genannt, aufnehmen kann, und bei der dieses getragene Teil (12) mit dem tragenden Teil (11) mit Hilfe dieses Sitzes (13) zusammengebaut wird, dadurch gekennzeichnet, daß, da das getragene Teil (12) am Ende des tragenden Teils (11) eingreift, die Zone des gegenseitigen Aneinanderstoßens (17) der beiden betreffenden Wandzonen (15₁, 15₂) des tragenden Teils (11) so vorgesehen ist, daß sie sich von einer zur anderen von zwei Ebenen (P₁, P₂) erstreckt, die parallel zueinander liegen und gemäß der Zusammendrückrichtung (D) dieser beiden Wandzonen (15₁, 15₂) zueinander verschoben sind.

2. Verfahren nach Anspruch 1, dadurch gekennzeichnet, daß ausgehend von einem gleichen rohrförmigen Teil (11') symmetrisch auf dieses Teil eingewirkt wird, um daraus zwei einander gegenüberliegende, gleiche tragende Teile (11) zu formen, und diese beiden tragenden Teile (11) anschließend voneinander getrennt werden.

3. Mechanische Einheit mit zwei miteinander verbundenen, rohrförmigen Teilen (11, 12), wobei eines dieser rohrförmigen Teile (11, 12), genannt tragendes Teil (11), einen Sitz (13) bildet, mit dessen Hilfe das andere der rohrförmigen Teile (11, 12), genannt getragenes Teil (12), an das tragende Teil angesetzt wird, dadurch gekennzeichnet, daß, in Anwendung eines Verfahrens gemäß einem der Ansprüche 1 und 2, der vom tragenden Teil (11) gebildete Sitz (13) in einem zusammengedrückten Bereich (16) dieses tragenden Teils (11) ausgeschnitten wird, in dem zwei einander gegenüberliegende Wandzonen (15₁, 15₂) dieses Teils zumindest lokal in einer Zone des gegenseitigen Aneinanderstoßens (17) miteinander in Kontakt stehen, die sich von einer zur anderen von zwei Ebenen (P₁, P₂) erstreckt, die parallel zueinander liegen und zueinander gemäß der Achse (A) des getragenen Teils (12) verschoben sind, wobei das getragene Teil (12) am Ende des tragenden Teils (11) eingreift.

4. Mechanische Einheit nach Anspruch 3, dadurch gekennzeichnet, daß in der Zone des gegenseitigen Aneinanderstoßens (17) seiner beiden einander gegenüberliegenden Wandzonen (15₁, 15₂) der zusammengedrückte Bereich (16) des tragenden Teils (11) seitlich zwei umgebogene Ränder (28) bildet, die zu beiden Seiten eines Mittelabschnitts (30) angeordnet sind und auf der gleichen Seite dieses mittleren Abschnitts (30) im wesentlichen parallel zueinander vorstehen, und die sich je auf der einen bzw. der anderen Seite der Achse (A) des getragenen Teils (12) erstrecken.

5. Mechanische Einheit nach Anspruch 4, dadurch gekennzeichnet, daß der mittlere Abschnitt (30) des zusammengedrückten Bereichs (16) des tragenden Teils (11) eben ist und sich im wesentlichen quer zur Achse (A) des getragenen Teils (12) erstreckt.

6. Mechanische Einheit nach Anspruch 5, dadurch gekennzeichnet, daß der mittlere Abschnitt (30) sich im wesentlichen senkrecht zur Achse (A) des getragenen Teils (12) erstreckt.

7. Mechanische Einheit nach Anspruch 4, dadurch gekennzeichnet, daß der mittlere Abschnitt (30) des zusammengedrückten Bereichs (16) des tragenden Teils (11) lokal zumindest eine Verformung (34) aufweist.

8. Mechanische Einheit nach Anspruch 7, dadurch gekennzeichnet, daß die Verformung (34) des mittleren Abschnitts (30) des zusammengedrückten Bereichs (16) des tragenden Teils (11) die Form eines Dieders hat.

9. Mechanische Einheit nach Anspruch 3, dadurch gekennzeichnet, daß in der Zone des gegenseitigen Aneinanderstoßens (17) seiner beiden einander gegenüberliegenden Wandzonen (15₁, 15₂) der zusammengedrückte Bereich (16) des tragenden Teils (11) seitlich zwei umgebogene Ränder (28') bildet, die zu beiden Seiten eines mittleren Abschnitts (30) angeordnet sind und auf beiden Seiten dieses mittleren Abschnitts (30) vorstehen, und die sich je auf der einen bzw. der anderen Seite der Achse (A) des getragenen Teils (12) erstrecken.

10. Mechanische Einheit nach einem der Ansprüche 4 bis 9, dadurch gekennzeichnet, daß das tragende Teil (11) mit seinen umgebogenen Ränder (28, 28') das getragene Teil (12) umgibt.

11. Mechanische Einheit nach Anspruch 10, dadurch gekennzeichnet, daß die umgebogenen Ränder (28, 28') des tragenden Teils (11) sich in bezug auf das getragene Teil (12) im wesentlichen tangential erstrecken.

12. Mechanische Einheit nach Anspruch 3, dadurch gekennzeichnet, daß der zusammengedrückte Bereich (16) des tragenden Teils (11) in seiner mittleren Zone gemäß der Zone des gegenseitigen Aneinanderstoßens (17) seiner beiden einander gegenüberliegenden Wandzonen (15₁, 15₂) mindestens eine Rippe (36, 36') bildet.

13. Mechanische Einheit nach Anspruch 12, dadurch gekennzeichnet, daß die Rippe (36) von einer lokalen Verformung einer der Wandzonen (15₁, 15₂) des tragenden Teils (11) gebildet wird.

14. Mechanische Einheit nach Anspruch 13, dadurch gekennzeichnet, daß sie Rükken an Rücken zwei Rippen (36), d.h. eine je Wandzone (15₁, 15₂) des tragenden Teils (11), aufweist.

15. Mechanische Einheit nach Anspruch 12, dadurch gekennzeichnet, daß die Rippe (36') von einer gleichzeitigen Verformung der einen und der anderen der Wandzonen (15₁, 15₂) des tragenden Teils (11) gebildet wird.

16. Mechanische Einheit nach Anspruch 3, dadurch gekennzeichnet, daß in der Zone des gegenseitigen Aneinanderstoßens (17) seiner beiden einander gegenüberliegenden Wandzonen (15₁, 15₂), der zusammengedrückte Bereich (16) des tragenden Teils (11) gemäß der allgemeinen Form einer länglichen Rinne, die im wesentlichen senkrecht zur Achse (A) des getragenen Teils (21) liegt, insgesamt umgeknickt oder gebogen wird.

17. Mechanische Einheit nach Anspruch 16, dadurch gekennzeichnet, daß der zusammengedrückte Bereich (16) des tragenden Teils (11) allgemein V-förmig umgeknickt ist.

18. Mechanische Einheit nach Anspruch 16, dadurch gekennzeichnet, daß der zusammengedrückte Bereich (16) des tragenden Teils (11) allgemein kreisbogenförmig umgebogen ist.

19. Mechanische Einheit nach einem der Ansprüche 16 bis 18, dadurch gekennzeichnet, daß der zusammengedrückte Bereich (16) des tragenden Teils (11) in seiner mittleren Zone mindestens eine Rippe (36') bildet.

20. Mechanische Einheit nach einem der Ansprüche 3 bis 19, dadurch gekennzeichnet, daß das getragene Teil (12) eine Buchse begrenzter Höhe ist.

21. Mechanische Einheit nach einem der Ansprüche 6 bis 20, dadurch gekennzeichnet, daß der auf dem tragenden Teil (11) ausgebildete Sitz (13) sich im Halbkreis gemäß einem Durchmesser erstreckt, der dem Außendurchmesser des getragenen Teils (12) entspricht.

22. Lenkerarm für ein Kraftfahrzeug, dadurch gekennzeichnet, daß er eine mechanische Einheit (10) gemäß einem der Ansprüche 3 bis 21 aufweist.

## Claims

1. Method of jointing two tubular parts (11, 12), of the kind in which one of the tubular parts, referred to herein as the carrying part (11), is locally crushed to move two opposite wall areas (15₁, 15₂) thereof toward each other, the carrying part (11) is crushed until the two wall areas (15₁, 15₂) thereof concerned are at least locally in contact with each other in a mutual facing area (17), a housing (13) adapted to receive the other tubular part, referred to herein as the carried part (12), is formed by cutting in the crushed portion of the carrying part (11), and the carried part (12) is assembled to the carrying part (11) by means of the housing (13), characterized in that, the carried part (12) being at the end of the carrying part (11), the mutual facing area (17) of the two wall areas (15₁, 15₂) concerned of the carrying part (11) extends from one to the other of two parallel planes (P₁, P₂) which are offset relative to each other in the direction (D) of crushing of the two wall areas (15₁, 15₂).

2. Method according to claim 1, characterized in that a common tubular blank (11') is worked symmetrically to form therein two facing identical carrying parts (11) and those two carrying parts (11) are thereafter separated from each other.

3. Mechanical assembly including two tubular parts (11, 12) joined together, one of the tubular parts (11, 12), referred to herein as the carrying part (11), forming a housing (13) by means of which the other tubular part (11, 12), referred to herein as the carried part (12), is assembled to it, characterized in that, in application of a method according to claim 1 or claim 2, the housing (13) that the carrying part (11) forms is cut into a crushed portion (16) of the carrying part (11) in which two opposite wall areas (15₁, 15₂) thereof are at least locally in contact with each other in a mutual facing area (17) which extends from one to the other of two parallel planes (P₁, P₂) which are offset relative to each other along the axis (A) of the carried part (12), the carried part (12) being at the end of the carrying part (11).

4. Mechanical assembly according to claim 3, characterized in that, in the mutual facing area (17) of its two opposite wall areas (15₁, 15₂), the crushed portion (16) of the carrying part (11) forms two lateral rims (28) on respective opposite sides of a middle portion (30), projecting from the same side of the middle portion (30), substantially parallel to each other, and each on respective opposite sides of the axis (A) of the carried part (12).

5. Mechanical assembly according to claim 4, characterized in that the middle portion (30) of the crushed portion (16) of the carrying part (11) is plane and substantially transverse to the axis (A) of the carried part (12).

6. Mechanical assembly according to claim 5, characterized in that the middle portion (30) is substantially perpendicular to the axis (A) of the carried part (12).

7. Mechanical assembly according to claim 4, characterized in that the middle portion (30) of the crushed portion (16) of the carrying part (11) includes at least one localized deformation (34).

8. Mechanical assembly according to claim 7, characterized in that the deformation (34) of the middle portion (30) of the crushed portion (16) of the carrying part (11) is in the form of a dihedron.

9. Mechanical assembly according to claim 3, characterized in that, in the mutual facing area (17) of its two opposite wall areas (15₁, 15₂), the crushed portion (16) of the carrying part (11) forms two lateral rims (28') on respective opposite sides of a middle portion (30) and projecting from two sides of the middle portion (30) on respective opposite sides of the axis (A) of the carried part (12).

10. Mechanical assembly according to any one of claims 4 to 9, characterized in that the carried part (12) is between the rims (28, 28') of the carrying part (11).

11. Mechanical assembly according to claim 10, characterized in that the rims (28, 28') of the carrying part (11) are substantially tangential to the carried part (12).

12. Mechanical assembly according to claim 3, characterized in that the crushed portion (16) of the carrying part (11) forms at least one rib (36, 36') in its central area along the mutual facing area (17) of its two opposite wall portions (15₁, 15₂).

13. Mechanical assembly according to claim 12, characterized in that the rib (36) is formed by localized deformation of one of the wall areas (15₁, 15₂) of the carrying part (11).

14. Mechanical assembly according to claim 13, characterized in that there are two back-to-back ribs (36), one on each wall area (15₁, 15₂) of the carrying part (11).

15. Mechanical assembly according to claim 12, characterized in that the rib (36') is formed by conjoint deformation of both wall areas (15₁, 15₂) of the carrying part (11).

16. Mechanical assembly according to claim 3, characterized in that the crushed portion (16) of the carrying part (11) is bent or curved in the mutual facing area (17) of its two opposite wall areas (15₁, 15₂), to the general form of an elongate gutter substantially perpendicular to the axis (A) of the carried part (12).

17. Mechanical assembly according to claim 16, characterized in that the crushed portion (16) of the carrying part (11) is bent to form a dihedron.

18. Mechanical assembly according to claim 16, characterized in that the crushed portion (16) of the carrying part (11) is curved to form a circular arc-shaped part.

19. Mechanical assembly according to any one of claims 16 to 18, characterized in that the crushed portion (16) of the carrying part (11) forms at least one rib (36') in its central area.

20. Mechanical assembly according to any one of claims 3 to 19, characterized in that the carried part (12) is a bush of limited height.

21. Mechanical assembly according to any one of claims 6 to 20, characterized in that the housing (13) formed on the carrying part (11) is semi-circular with a diameter that corresponds to the outside diameter of the carried part (12).

22. Automobile vehicle suspension arm characterized in that it includes a mechanical assembly (10) according to any one of claims 3 to 21.
